(19) Europäisches Patentamt
European Patent Office
Office européen des brevets

(11) **EP 3 878 665 B1**

(12) **EUROPEAN PATENT SPECIFICATION**

(45) Date of publication and mention
of the grant of the patent:
**10.01.2024 Bulletin 2024/02**

(21) Application number: **19882922.8**

(22) Date of filing: **08.11.2019**

(51) International Patent Classification (IPC):
**B60C 1/00** *(2006.01)*      **B60C 15/06** *(2006.01)*
**C08L 67/00** *(2006.01)*     **B60C 15/04** *(2006.01)*
**C08L 67/02** *(2006.01)*

(52) Cooperative Patent Classification (CPC):
(C-Sets available)
**B60C 15/04; B60C 15/0603; C08L 67/02;
C08L 67/025;** B60C 2001/0058      (Cont.)

(86) International application number:
**PCT/JP2019/043889**

(87) International publication number:
**WO 2020/096047 (14.05.2020 Gazette 2020/20)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2018 JP 2018211787**

(43) Date of publication of application:
**15.09.2021 Bulletin 2021/37**

(73) Proprietor: **BRIDGESTONE CORPORATION
Chuo-ku
Tokyo 104-8340 (JP)**

(72) Inventors:
• **YAMADA, Takumi
Tokyo 104-8340 (JP)**
• **FUDEMOTO, Hiroyuki
Tokyo 104-8340 (JP)**

(74) Representative: **Marks & Clerk LLP
15 Fetter Lane
London EC4A 1BW (GB)**

(56) References cited:
**JP-A- H07 315 014      JP-A- H09 300 924
JP-A- H09 300 924      JP-A- 2002 080 635
JP-A- 2003 128 844      JP-A- 2015 123 905
JP-A- 2015 123 905**

(52) Cooperative Patent Classification (CPC): (Cont.)

C-Sets
**C08L 67/02, C08L 67/025;**
**C08L 67/025, C08L 67/02**

## Description

Technical Field

The disclosure relates to a tire.

Background Art

A bead portion serving as fixing to a rim is provided at a position where a tire is in contact with the rim. Metallic wires are used as bead wires in such a bead portion.

For example, a pneumatic tire has been proposed where a bead core and a bead filler located at an outer side of the bead core in the tire radial direction are embedded in a bead portion (see, for example, Patent Literature 1).

A bead core has also been proposed which is formed of a bead wire covered with a resin material for the purpose of a reduction in weight of a member of a pneumatic tire (see, for example, Patent Literature 2).

Patent Literature 1: Japanese Patent Application Laid-Open (JP-A) No. 2013-86771

Patent Literature 2: Japanese Patent Application Laid-Open (JP-A) No. 2011-207157 Other prior art documents are known from JP 2015-123905-A and JP-H09-300924A each of them showing a tire having a bead core and a bead filler located at an outer side of the bead core in a tire radial direction and using a resin composition, which comprises a thermoplastic resin and a thermoplastic elastomer.

SUMMARY OF INVENTION

Technical Problem

In the pneumatic tire disclosed in Patent Literature 1, the bead filler is formed of a rubber composition, and it is not considered to use any resin in the bead filler.

On the other hand, in the bead core disclosed in Patent Literature 2, the bead wire is covered with the resin material. However, it is desired to provide excellent load resistance and impact resistance in a bead portion, because tires mounted to a vehicle are loaded by the vehicle body and also receive impact during travelling.

An object is to provide a tire excellent in load resistance and impact resistance, in view of the above circumstances.

Solution to Problem

The invention provides a tire according to claim 1.

Advantageous Effect of Invention

According to the invention, a tire excellent in load resistance and impact resistance is provided.

BRIEF DESCRIPTION OF DRAWINGS

Figure 1 is a schematic cross-sectional view illustrating a cross section in a tire width direction, of an example of a configuration of a tire according to an embodiment.

Figure 2 is a schematic cross-sectional view enlarging and illustrating a bead member of the tire illustrated in Figure 1.

Figure 3 is a diagram illustrating each Tan $\delta$ curve obtained by viscoelasticity measurement of a polyester-based thermoplastic elastomer (TPC1) and polybutylene terephthalate (PBT).

Figure 4 is a diagram illustrating a Tan $\delta$ curve obtained by viscoelasticity measurement of a resin composition obtained by blending at a mass ratio of TPC1/PBT of 80/20.

Figure 5 is a diagram illustrating each Tan $\delta$ curve obtained by viscoelasticity measurement of a polyester-based thermoplastic elastomer (TPC2) and polybutylene terephthalate (PBT) used in Examples.

Figure 8 is a diagram illustrating a Tan $\delta$ curve obtained by viscoelasticity measurement of a resin composition obtained by blending at a mass ratio of TPC2/PBT of 90/10.

Figure 9 is a diagram obtained by fitting of a Tan $\delta$ curve of only TPC2 and a curve obtained by combining respective Tan $\delta$ curves of TPC2 and PBT, to the Tan $\delta$ curve illustrated in Figure 8.

Figure 10 is a diagram illustrating a Tan δ curve obtained by viscoelasticity measurement of a resin composition (Comparative Example) changed in blending ratio of TPC2 and PBT.

Figure 11 is a diagram illustrating a Tan δ curve obtained by viscoelasticity measurement of a resin composition (Comparative Example) changed in blending ratio of TPC3 and PBT.

Figure 12 is a diagram for describing the half-value width of Tan δ curve obtained by viscoelasticity measurement of resin composition obtained by blending at a mass ratio of TPC2/PBT of 90/10.

DESCRIPTION OF EMBODIMENTS

Hereinafter, specific embodiments will be described in detail, but the invention is not limited to the following embodiments at all and can be appropriately modified and carried out within the scope of the appended claims.

The "resin" simply mentioned herein conceptually includes a thermoplastic resin, a thermoplastic elastomer, and a thermosetting resin, and does not include any vulcanized rubber. The "same" in the following description of any resin means that respective skeletons included in main chains in resins, such as ester-based resins or styrene-based resins, are common to the resins.

A numerical value range herein represented by "(from) ... to ..." means a numerical value range including numerical values described before and after "to" as a lower limit and an upper limit, respectively.

The "thermoplastic resin" herein means a polymer compound in which the material thereof is softened and fluidized according to the rise of temperature, and not only is relatively hard and has strength, but also has no rubbery elasticity, according to cooling.

The "thermoplastic elastomer" herein means a copolymer having a hard segment and a soft segment. Examples of the thermoplastic elastomer include one in which the material thereof is softened and fluidized according to the rise of temperature, and not only is relatively hard and has strength, but also has rubbery elasticity, according to cooling. Examples of the thermoplastic elastomer specifically include a copolymer having a polymer that forms a hard segment that is crystalline and high in melting point or a hard segment that is high in cohesion, and a polymer that forms a soft segment that is amorphous and low in glass transition temperature.

The hard segment refers to a relatively harder component than the soft segment. The hard segment is preferably a molecule confinement component that serves as a crosslinked point in crosslinked resin that prevents plastic deformation. Examples of the hard segment include a segment having a structure that has a rigid group such as an aromatic group or an alicyclic group in a main skeleton, or a structure that can allow for intermolecular packing due to intermolecular hydrogen bonding or $\pi$-$\pi$ interaction.

The soft segment refers to a relatively softer component than the hard segment. The soft segment is preferably a flexible component that exhibits rubber elasticity. Examples of the soft segment include a segment having a structure that has a long-chain group (for example, a long-chain alkylene group) in a main chain, that is high in degree of freedom of molecular rotation, and that has elasticity.

A tire according to the embodiment includes a bead member having a bead core and a bead filler located at an outer side of the bead core in the tire radial direction, in which the bead filler is formed of a resin composition which includes a thermoplastic resin and a thermoplastic elastomer, of which a Tan δ curve (namely, loss tangent curve) obtained by viscoelasticity measurement has at least two peaks, or at least one peak having one or more shoulders, and which has a tensile elastic modulus of from 400 to 1100 MPa. The thermoplastic resin is a polyester-based thermoplastic resin and the thermoplastic elastomer is a polyester-based thermoplastic elastomer.

As a result of studies by the present inventors, it has been found that both load resistance and impact resistance of a tire can be satisfied by configuring a tire, which includes a bead member obtained by forming a bead filler from a resin composition in which a specified thermoplastic elastomer and a specified thermoplastic resin are blended to adjust viscoelasticity and tensile elastic modulus, and integrating the bead filler and a bead core. The reason for this is not necessarily clear but is considered to be as follows.

In a case in which a bead filler is formed from only a thermoplastic elastomer, such a bead filler is rich in flexibility and can impart impact resistance to a tire, but is hardly increased in hardness and thus hardly enhances load resistance against any load applied from a vehicle body. On the other hand, in a case in which a bead filler is formed from only a thermoplastic resin, such a bead filler is hard and can enhance load resistance of a tire, but hardly increases flexibility and hardly enhances impact resistance of a tire.

It has thus been considered to form a bead filler from a resin composition in which a thermoplastic elastomer and a thermoplastic resin are properly blended, but too high of a compatibility between such thermoplastic elastomer and thermoplastic resin causes behavior such as that of one resin material to be exhibited, whereby characteristics of the respective materials cannot be sufficiently exhibited. However, it is considered that impact resistance mainly due to a thermoplastic elastomer and load resistance mainly due to a thermoplastic resin can be exhibited in a balanced manner by selecting materials and a blending amount thereof so that a sea-island structure of a thermoplastic elastomer and a thermoplastic resin is made, namely, with the thermoplastic elastomer functioning as a sea section and the thermoplastic resin functioning as an island section, and forming a bead filler from such a resin composition in which a Tan δ curve obtained by viscoelasticity measurement has at least two peaks, or at least one peak having one or more shoulders, and a tensile elastic modulus is from 400 to 1100 MPa. It is also considered that, even in a case in which a thermoplastic elastomer and a thermoplastic resin included in a resin composition are compatible with each other to some extent and no clear sea-island structure is formed, characteristics of respective resin materials (namely, impact resistance and load resistance) are exhibited, provided that a Tan δ curve obtained by viscoelasticity measurement has at least two peaks, or at least one peak having one or more shoulders, and a tensile elastic modulus of from 400 to 1100 MPa is exhibited.

The bead filler of the bead member in the tire according to the embodiment has load resistance mainly due to the thermoplastic resin, and thus can contribute to the continuation of travelling even in a case in which any tire of a vehicle equipped with the tire according to the embodiment is punctured and the pneumatic pressure in the tire is reduced. Thus, the tire according to the embodiment can also be useful as a run-flat tire capable of allowing for travelling even after puncture.

A tire according to an embodiment is described with reference to the drawings. Each of the drawings illustrated below is schematically illustrated, and the size and shape of each portion are appropriately overdrawn in order to facilitate understanding.

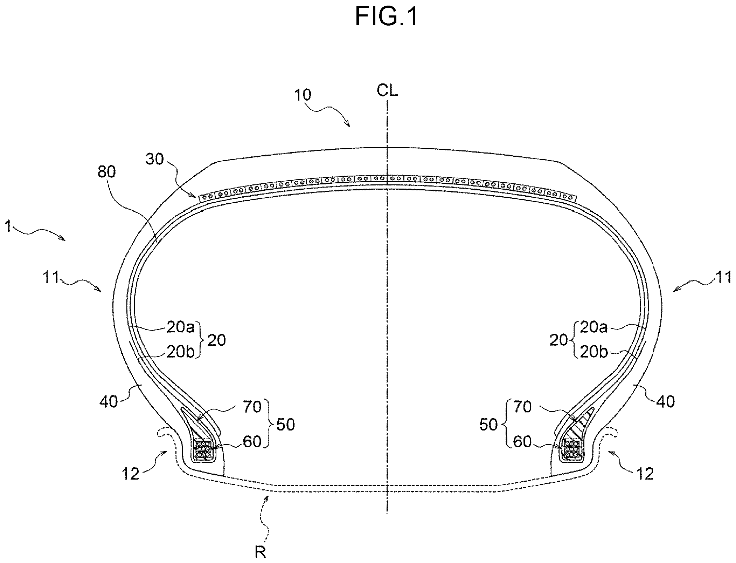

Figure 1 is a cross-sectional view in the tire width direction, schematically illustrating one example of a configuration of the tire according to the embodiment. For convenience' sake, Figure 1 illustrates a rim R to which the tire 1 is fitted, by a dashed line.

The tire 1 includes a pair of bead portions 12 disposed at both sides relative to a tire equatorial plane CL, a pair of side portions 11 extending outward in the tire radial direction, from the pair of bead portions 12, and a tread portion 10 connecting the pair of side portions 11, as illustrated in Figure 1. The pair of bead portions 12 includes respective circular bead cores 60.

In the example of Figure 1, a carcass 20 including a carcass ply of at least one layer (one layer in the example of the drawing) extends in a toroidal manner, between the bead cores 60 included in the pair of bead portions 12. The carcass ply of the carcass 20 has, for example, a configuration in which a steel or organic fiber cord is covered with rubber.

In the example of Figure 1, the carcass 20 includes a body portion 20a extending in a toroidal manner, between the pair of bead cores 60, and a pair of folded portions 20b folded outward in the tire width direction, around the bead cores 60, from the innermost end of the body portion 20a in the tire radial direction, at both sides relative to the tire equatorial plane CL.

In the example of Figure 1, an inner liner 80 for prevention of air leakage is disposed at inner sides of the tread portion 10 and the side portions 11. A belt 30 formed of at least one belt layer (one layer in the example of the drawing) is disposed at an outer side of a crown region of the carcass 20 in the tire radial direction at the tread portion 10. The belt layer is formed by, for example, winding a reinforcing cord covered with a resin, onto an area on which the belt layer is to be formed.

<Bead Member>

In the example of Figure 1, a bead member 50, which is configured from a bead core 60 including a metallic cord such as a steel cord and a bead filler 70 located at an outer side of the bead core 60 in the tire radial direction, is disposed at each of the bead portions 12. In the example of Figure 1, the bead member 50 is embedded in rubber 40.

[Bead Core]

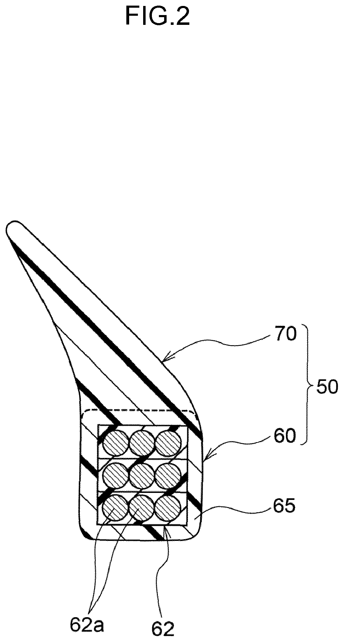

Figure 2 is an enlarged view of the bead member of the tire 1 illustrated in Figure 1. In the example of Figure 2, a bead core 60 included in a bead member 50 has a plurality of bead wires 62a, a covering resin 62 with which the periphery of the bead wires 62a is covered, and a covering layer 65 with which the periphery of the covering resin 62 is covered. The bead core 60 illustrated in Figure 2 includes the plurality of bead wires 62a, but the number of such bead wires 62a included in the bead core 60 is not particularly limited, and may be one or may be two or more.

In the example of Figure 2, while the covering layer 65 of the bead core 60 is integrally formed from the same material as that of a bead filler 70, the covering layer 65 of the bead core 60 may be formed from any material different from that of the bead filler 70. The covering layer 65 may also be omitted.

Any known material can be used for the bead wires 62a, and for example, a steel cord can be used therefor. The steel cord can be, for example, one including a steel monofilament or stranded wire. An organic fiber, a carbon fiber, or the like can also be used.

The covering resin 62, with which the periphery of the bead wires 62a is covered, may directly cover the bead wires 62a, or may cover the bead wires 62a via an adhesion layer (not illustrated). Any known material can be used for the covering resin 62 and the adhesion layer. For example, the same material as that of the bead filler 70 in the embodiment may be used therefor.

[Bead Filler]

The bead filler 70 is located outward in the tire radial direction so as to extend outward in the tire radial direction, from the bead cores 60 between the body portion 20a and such each folded portion 20b of the carcass, as illustrated in Figure 1. The bead filler 70 in the embodiment is formed from a resin composition which includes a thermoplastic resin and a thermoplastic elastomer, in which a Tan δ curve obtained by viscoelasticity measurement has at least two peaks, or at least one peak having one or more shoulders, and which has a tensile elastic modulus of from 400 to 1100 MPa.

Hereinafter, the resin composition constituting the bead filler is described in detail.

(Thermoplastic Elastomer)

A thermoplastic elastomer included in the resin composition constituting the bead filler (hereinafter, also simply referred to as "resin composition") is not particularly limited as long as the elastomer has a structural unit corresponding to a hard segment and a structural unit corresponding to a soft segment in its molecule.

For example, the "polyester-based thermoplastic elastomer" herein means a thermoplastic elastomer whose hard segment is a structural unit having an ester bond in a main chain. The same is also true for other thermoplastic elastomers.

The resin composition may include only one or two or more thermoplastic elastomers.

-Glass Transition Temperature (Tg)-

The thermoplastic elastomer preferably has a glass transition temperature (Tg) of less than 25°C, more preferably 20°C or less, still more preferably 18°C or less from the viewpoint of an enhancement in flexibility (namely, impact resistance) of the bead filler. The lower limit of the glass transition temperature (Tg) of the thermoplastic elastomer is not particularly limited, and for example, that of the polyester-based thermoplastic elastomer is preferably -50°C or more, still more preferably -40°C or more from the viewpoint of trade-off between heat resistance and impact resistance.

The Tg of the resin herein is determined from a Tan δ curve obtained by viscoelasticity measurement. For example, the Tg is obtained by subjecting a test piece having a width of 6 mm, a length of 38 mm, and a thickness of 2 mm to a torsion test mode at a measurement gap of 20 mm with a viscoelasticity measurement apparatus (ARES-G2) manufactured by TA Instruments, under conditions of a range of from -100°C to 150°C, a strain of 0.28%, and 35 Hz.

-Ratio of HS/SS-

The ratio of the hard segment (HS) and the soft segment (SS) in the resin composition on a mass basis (HS/SS, hereinafter, also referred to as "ratio of HS") may be in a range of from 50/50 to 90/10.

It is considered that, while the ratio of HS in the resin composition is 50% by mass or more, thereby resulting in an increase in rigidity of the bead filler and thus an enhancement in cornering power, the ratio of HS is suppressed to 90% by mass or less, thereby allowing favorable impact resistance to be maintained without an excessive increase in rigidity of the bead filler.

It has been further found that, in a case in which the ratio of HS in the resin composition is in a range of from 60% by mass to less than 80% by mass, favorable impact resistance is maintained as compared with a case in which the ratio of HS in the resin composition is out of the range. Although the reason for this is not necessarily clear, it is presumed that the thermoplastic elastomer and the thermoplastic resin are not compatible and form a sea-island structure.

When the ratio of HS in the resin composition is 60% by mass or more, a bead filler formed from the resin composition including this can be expected to exert not only the effect of enhancing barrier properties to steam and thus enhancing resistance to moist heat, but also the effect of enhancing plunger resistance.

The ratio of HS in the resin composition herein refers to the proportion of HS in the total of the hard segment (HS) and the soft segment (SS), and is calculated according to the following expression.

$$\text{Ratio (\% by mass) of HS} = \{\text{HS}/(\text{HS} + \text{SS})\} \times 100$$

The ratio of HS in the resin composition can be measured, for example, by a nuclear magnetic resonance (NMR) method, as follows. Specifically, the ratio of HS can be measured by diluting and dissolving 20 mg/2g of the resin in HFIP-$d_2$(1,1,1,3,3,3-hexafluoroisopropanol-$d_2$) as a solvent to provide a measurement sample, and performing $^1$H-NMR measurement at room temperature by use of AL400 manufactured by JEOL Ltd., as an NMR analysis apparatus.

The ratio of HS in the resin composition may be, for example, from 63% by mass to 74.5% by mass.

Examples of a usable thermoplastic elastomer include a thermoplastic elastomer such as a polyester-based thermoplastic elastomer (TPC), a polyamide-based thermoplastic elastomer (TPA), or an olefin-based thermoplastic elastomer (TPO). The definition and classification of the thermoplastic elastomer can be seen in JIS K6418: 2007.

The thermoplastic elastomer is a polyester-based thermoplastic elastomer (TPC), from the viewpoint that both favorable impact resistance and enhanced load resistance are achieved.

Examples of the polyester-based thermoplastic elastomer include one whose hard segment is at least one selected from the group consisting of polybutylene terephthalate (PBT), polyethylene terephthalate (PET), polybutylene naphthalate (PBN), and polyethylene naphthalate (PEN). The type of the soft segment in this case is not particularly limited, and examples include an aliphatic polyether such as polytetramethylene glycol (PTMG), and an aliphatic polyester.

Specific examples of a usable polyester-based thermoplastic elastomer are described below.

Polyester-based Thermoplastic Elastomer

Examples of the polyester-based thermoplastic elastomer include a material in which at least a polyester forms a hard segment that is crystalline and high in melting point and other polymer (for example, polyester, polyether or the like) forms a soft segment that is amorphous and low in glass transition temperature.

Examples of the polyester that forms the hard segment include an aromatic polyester. The aromatic polyester can be formed from, for example, an aromatic dicarboxylic acid or an ester-formable derivative thereof and an aliphatic diol. The aromatic polyester is preferably polybutylene terephthalate derived from terephthalic acid and/or dimethyl terephthalate and 1,4-butanediol, and furthermore may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-formable derivative thereof, and a diol having a molecular weight of 300 or less, for example, an aliphatic diol such as ethylene glycol, trimethylene glycol, pentamethylene glycol, hexamethylene glycol, neopentyl glycol, or decamethylene glycol, an alicyclic diol such as 1,4-cyclohexanedimethanol or tricyclodecanedimethylol, or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl] sulfone, 1,1-bis[4-(2-hydroxyethoxy)phenyl]cyclohexane, 4,4'-dihydroxy-p-terphenyl, or 4,4'-dihydroxy-p-quarterphenyl, or a copolymerized polyester in which such dicarboxylic acid component and diol component are each used in combination of two or more kinds thereof. A tri- or higher polyfunctional carboxylic acid component, a polyfunctional oxyacid component, a polyfunctional hydroxy component, or the like can also be copolymerized in a range of 5% by mol or less.

Examples of the polyester that forms the hard segment include polyethylene terephthalate, polybutylene terephthalate, polymethylene terephthalate, polyethylene naphthalate, and polybutylene naphthalate, preferably include polybutylene terephthalate.

Examples of the polymer that forms the soft segment include an aliphatic polyester and an aliphatic polyether.

Examples of the aliphatic polyether include poly(ethylene oxide)glycol, polypropylene oxide)glycol, poly(tetramethylene oxide)glycol, poly(hexamethylene oxide)glycol, a copolymer of ethylene oxide and propylene oxide, an ethylene oxide adduct of polypropylene oxide)glycol, and a copolymer of ethylene oxide and tetrahydrofuran.

Examples of the aliphatic polyester include poly($\varepsilon$-caprolactone), polyenantholactone, polycaprylolactone, polybutylene adipate, and polyethylene adipate.

The polymer that forms the soft segment, among these aliphatic polyethers and aliphatic polyesters, is preferably, for example, poly(tetramethylene oxide)glycol, an ethylene oxide adduct of polypropylene oxide)glycol, poly($\varepsilon$-caprolactone), polybutylene adipate, or polyethylene adipate, from the viewpoint of elastic properties of a polyester block copolymer to be obtained.

The number average molecular weight of the polymer that forms the soft segment is preferably from 300 to 6000 from the viewpoint of toughness and flexibility. The mass ratio (x: y) of the hard segment (x) and the soft segment (y) is preferably from 99:1 to 20:80, still more preferably from 98:2 to 30:70, from the viewpoint of moldability.

Examples of the combination of the hard segment and the soft segment can include any combination of the above hard segment and soft segment. In particular, the combination of the hard segment and the soft segment is preferably a combination in which the hard segment is polybutylene terephthalate and the soft segment is the aliphatic polyether, still more preferably a combination in which the hard segment is polybutylene terephthalate and the soft segment is poly(ethylene oxide)glycol.

Examples of a commercially available product of the polyester-based thermoplastic elastomer used herein include, for example, any of "Hytrel" series (for example, 3046, 5557, 6347, 4047, and 4767) manufactured by Du Pont-Toray Co., Ltd., and "PELPRENE" series (for example, P30B, P40B, P40H, P55B, P70B, P150B, P280B, E450B, P150M, S1001, S2001, S5001, S6001, and S9001) manufactured by Toyobo Co., Ltd.

The polyester-based thermoplastic elastomer can be synthesized by copolymerization of the polymer that forms the hard segment and the polymer that forms the soft segment according to a known method.

(Thermoplastic Resin)

The thermoplastic resin is not particularly limited as long as it is polyester-based thermoplastic resin in which a Tan $\delta$ curve obtained in measurement of the viscoelasticity of a resin composition including the resin mixed with the thermoplastic elastomer has at least two peaks, or at least one peak having one or more shoulders, and which has a tensile elastic modulus of from 400 to 1100 MPa, and preferably includes the same structural unit as that of the hard segment of the thermoplastic elastomer from the viewpoint of compatibility. The "same structural unit as that of the hard segment of the thermoplastic elastomer" herein means a structural unit that is the same in terms of a binding form providing a main chain of the structural unit corresponding to the hard segment of the thermoplastic elastomer. For example, in a case in which the structural unit corresponding to the hard segment of the thermoplastic elastomer is a polyester, the thermoplastic resin is a polyester. The resin composition may include one or more of such thermoplastic elastomers.

The hard segment of the thermoplastic elastomer is more preferably closer to the structure of the thermoplastic resin from the viewpoint that favorable adhesiveness to a tire frame is ensured. For example, in a case in which the hard segment of the thermoplastic elastomer is polybutylene terephthalate, the thermoplastic resin is preferably polybutylene terephthalate, polyethylene terephthalate, polybutylene naphthalate, or polyethylene naphthalate, more preferably polybutylene terephthalate.

The thermoplastic resin "including the same structural unit as that of the hard segment of the thermoplastic elastomer" herein means both a case in which the resin includes only the same structural unit as that of the hard segment of the thermoplastic elastomer and a case in which 80% by mass or more, preferably 90% by mass or more, more preferably 95% by mass or more of the structural unit included in the thermoplastic resin corresponds to the same structural unit as that of the hard segment of the thermoplastic elastomer. In a case in which two or more structural units each corresponding to the hard segment of the thermoplastic elastomer are present, the thermoplastic resin is defined to be one including the same structural unit as any structural unit present at the highest rate, among such two or more structural units.

-Glass Transition Temperature (Tg)-

The glass transition temperature (Tg) of the thermoplastic resin is preferably 30°C or more, more preferably 40°C or more, still more preferably 45°C or more from the viewpoint of an enhancement in rigidity of the bead filler. The upper limit of the glass transition temperature (Tg) of the thermoplastic resin is preferably 200°C or less from the viewpoint of molding processability.

Examples of any usable thermoplastic resin include polyester-based thermoplastic resin including the above structural unit corresponding to the hard segment of the thermoplastic elastomer. Specific examples of such usable polyester-based thermoplastic resin are described below.

Polyester-based Thermoplastic Resin

Examples of the polyester-based thermoplastic resin can include a polyester that forms the hard segment of the polyester-based thermoplastic elastomer. Specific examples can include an aliphatic polyester such as polylactic acid, polyhydroxy-3-butylbutyric acid, polyhydroxy-3-hexylbutyric acid, poly($\varepsilon$-caprolactone), polyenantholactone, poly-caprylolactone, polybutylene adipate, or polyethylene adipate, and an aromatic polyester such as polyethylene terephthalate, polybutylene terephthalate, polyethylene naphthalate, or polybutylene naphthalate. In particular, the polyester-based thermoplastic resin is preferably an aromatic polyester, more preferably polybutylene terephthalate, from the viewpoint of heat resistance and processability.

Examples of a commercially available product of the polyester-based thermoplastic resin used herein include any of "DURANEX" series (for example, 201AC, 2000, and 2002) manufactured by Polyplastics Co., Ltd., "NOVADURAN" series (for example, 5010R5 and 5010R3-2) manufactured by Mitsubishi Engineering-Plastics Corporation, and "Toraycon" series (for example, 1401X06 and 1401X31) manufactured by Toray Industries, Inc.

(Viscoelasticity)

In the resin composition of the embodiment, a Tan $\delta$ curve obtained by viscoelasticity measurement has at least two peaks, or at least one peak having one or more shoulders.

In a case in which the Tan $\delta$ curve obtained by viscoelasticity measurement has two or more peaks, it can be determined that two or more resin components are present in the resin composition without being compatible with each other (namely, a sea-island structure is formed).

In a case in which the Tan $\delta$ curve obtained by viscoelasticity measurement has at least one peak and one shoulder, it can be determined that two or more resin components are present in the resin composition without being compatible with each other (namely, a sea-island structure is formed), or are present in the resin composition without being completely compatible with each other, while a clear sea-island structure is not formed.

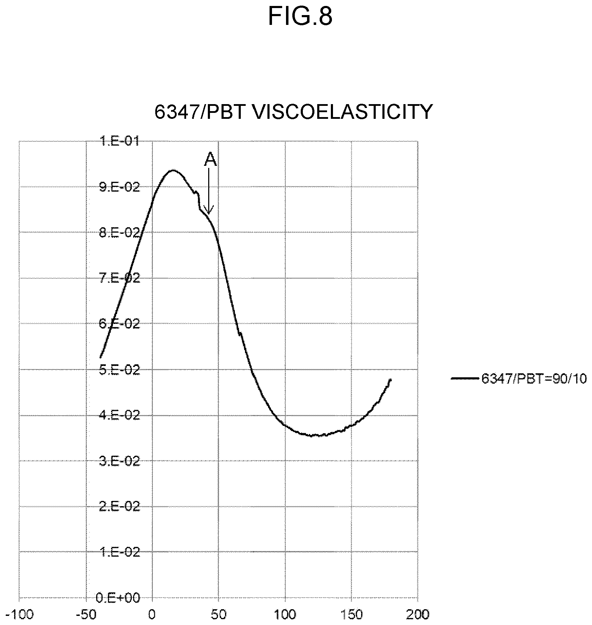

Such a shoulder in the Tan $\delta$ curve corresponds to a portion in the Tan $\delta$ curve at which, in a curve descending from a peak top derived from a specified resin component included in the resin composition toward each of a lower temperature side and a higher temperature side, a peak derived from another resin component overlaps therewith, and the peak derived from the other resin component is not clearly observed, but the curve is raised at a position corresponding to the peak derived from the other resin component, and, for example, corresponds to a portion indicated by an arrow A in Tan $\delta$ curve shown in Figure 8 described below.

The Tan $\delta$ curve preferably has a peak or shoulder derived from the thermoplastic elastomer in a lower temperature region and a peak or shoulder derived from the thermoplastic resin in a higher temperature region.

The peak or shoulder derived from the thermoplastic elastomer is preferably present in a temperature range of 30°C or less. When the peak or shoulder derived from the thermoplastic elastomer is present in a temperature range of 30°C or less, rigidity of the thermoplastic elastomer is not too high, thereby resulting in a tendency to allow impact resistance to be maintained. The lower limit of the temperature range in which the peak or shoulder derived from the thermoplastic elastomer is present is not particularly limited, and is preferably, for example, -25°C or more.

The temperature range in which the peak or shoulder derived from the thermoplastic resin is not particularly limited, and the peak or shoulder is preferably present, for example, in a temperature range of from 45°C to 150°C.

A Tan $\delta$ curve obtained by viscoelasticity measurement herein is obtained by, for example, subjecting a test piece having a width of 6 mm, a length of 38 mm, and a thickness of 2 mm to a torsion test mode at a measurement gap of 20 mm with a viscoelasticity measurement apparatus (ARES-G2) manufactured by TA Instruments, under conditions of a range of from -100°C to 150°C, a strain of 0.28%, and 35 Hz.

The Tan $\delta$ curve preferably has at least a peak derived from the polyester-based thermoplastic elastomer and a peak derived from the polyester-based thermoplastic resin. In a case in which the Tan $\delta$ curve obtained by viscoelasticity measurement has a peak derived from the polyester-based thermoplastic elastomer and a peak derived from the polyester-based thermoplastic resin, it can be determined that both the elastomer and the resin are present in the resin composition without being compatible with each other (namely, a sea-island structure is formed).

In a case in which it is difficult to confirm whether the peak or shoulder is present or not in the Tan $\delta$ curve, such confirmation can be made by fitting. The detailed method is the following method.

<Detail of Analysis Method>

• Analysis temperature region: from -40 to 100°C
• Fitting function: Voigt function

$$F(x) = \int_{-\infty}^{\infty} \frac{a_0 \exp(-y^2)}{a_3^2 + \left[\left(\frac{x-a_1}{a_2}\right) - y\right]^2} dy \left(\int_{-\infty}^{\infty} \frac{\exp(-y^2)}{a_3^2 + y^2} dy\right)^{-1}$$

$a_0$: peak height, $a_1$: peak position, $a_2$: Gauss width, $a_3$: Lorentz width

(Fitting Parameters)

· 1 function fitting → center value: 13.7 (Tg (°C) of thermoplastic elastomer)
· 2 function fitting → center value: 13.7 (Tg (°C) of thermoplastic elastomer), 50 (Tg (°C) of thermoplastic resin)
* Peak height/peak width automatically set by software in fitting after setting of center values

(Analysis Procedure)

(1) Fitting with the above fitting parameters
(2) Calculation of the respective sums of squares of the differences between points of the output data and the raw data
(3) Comparison of the sums of squares, calculated above, and determination of a smaller value as highly accurate fitting

-Half-value Width -

The resin composition in the embodiment preferably has a half-value width of 70°C or more, in the Tan $\delta$ curve obtained by viscoelasticity measurement. In a case in which the half-value width in the Tan $\delta$ curve is 70°C or more, both properties including rigidity mainly due to the thermoplastic resin and flexibility mainly due to the thermoplastic elastomer are exhibited in a well-balanced manner. The half-value width in the Tan $\delta$ curve is more preferably 80°C or more, still more preferably 85°C or more, from such a viewpoint. The half-value width in the Tan $\delta$ curve is calculated as follows.

(1) The difference between the lowest value and the peak top around from -100°C to 150°C in the Tan $\delta$ curve is defined as a height.
(2) The Tan $\delta$ value at the half value of the height is determined.
(3) The width between the temperature values of the higher temperature and the lower temperature at the Tan $\delta$ at the half value of the height is determined as the half-value width.

While the upper limit of the half-value width in the Tan $\delta$ curve is not particularly limited, the half-value width in the Tan $\delta$ curve may be 100°C or less because a too wide half-value width is disadvantageous in terms of generation of heat of a material.

In a case in which two or more peaks are present in a Tan $\delta$ curve around from -100°C to 150°C, the half-value width may be determined according to (2) and (3) above with the difference between the peak top of the highest peak and the lowest point around from -100°C to 150°C, among all such peaks, being as the height.

(Tensile Elastic Modulus)

The resin composition in the embodiment has a tensile elastic modulus of from 400 to 1100 MPa. The tensile elastic modulus of the resin composition is 400 MPa or more, whereby rigidity (namely, load resistance) of the resin composition is increased. In this regard, the tensile elastic modulus of the resin composition is 1100 MPa or less, whereby the effect of improving impact resistance is exerted. The tensile elastic modulus of the resin composition is preferably from 400 to 1100 MPa, more preferably from 450 to 1050 MPa, still more preferably from 490 to 1000 MPa.

The tensile elastic modulus of the resin composition is measured according to JIS K7113: 1995.

Specifically, for example, the tensile rate is set to 100 mm/min and the tensile elastic modulus is measured by use of Shimadzu Autograph AGS-J (5KN) manufactured by Shimadzu Corporation.

(Blending Ratio)

The blending ratio of the thermoplastic elastomer and the thermoplastic resin may be any blending ratio at which a resin composition obtained by blending has a Tan $\delta$ curve, obtained by viscoelasticity measurement thereof, having at least two peaks, or at least one peak having one or more shoulders, and has a tensile elastic modulus of from 400 to 1100 MPa. The blending ratio (mass basis) of thermoplastic elastomer/thermoplastic resin is usually from 65/35 to 95/5, preferably from 70/30 to 90/10, depending on the resin used.

(Other Component)

The resin composition may include, if necessary, any component other than the thermoplastic elastomer and the thermoplastic resin. Examples of such other component include rubber, each filler (for example, silica, calcium carbonate, or clay), an anti-aging agent, a plasticizer, a colorant, a weather-resistant agent, a reinforcing material, and a crosslinking agent.

In a case in which the resin composition includes any component other than the thermoplastic elastomer and the thermoplastic resin, the proportion of the thermoplastic elastomer and the thermoplastic resin in the entire resin composition is preferably 70% by mass or more, more preferably 80% by mass or more, still more preferably 90% by mass or more.

The tire according to the embodiment includes the above-mentioned bead member. The configuration excluding the bead member, of the tire according to the embodiment, is not particularly limited, and the tire may be a rubber tire provided with a carcass or may be a resin tire provided with a tire frame.

The carcass or tire frame, which may be included in the tire according to the embodiment, is here described.

<Tire Frame or Carcass>

The "carcass" in the disclosure is a member serving as a frame of a rubber tire, and examples include so-called radial carcass, bias carcass, and semi-radial carcass. The carcass generally has a structure in which a reinforcing material such as a cord or a fiber is covered with a rubber material.

The "tire frame" in the disclosure means a member that corresponds to a carcass of a rubber tire and that is formed from a resin material (so-called tire frame for resin tires).

Examples of an elastic material forming the carcass include a rubber material described below, and examples of an elastic material forming the tire frame include a resin material described below.

(Elastic Material: Rubber Material)

The rubber material forming the carcass may include at least rubber (rubber component), and may include any other component such as an additive as long as the effects of the embodiment are not impaired. The content of the rubber (rubber component) in the rubber material is preferably 50% by mass or more, still more preferably 90% by mass or more with respect to the total amount of the rubber material.

The rubber component is not particularly limited, and any natural rubber and various synthetic rubber for use in conventionally known rubber compotation can be used singly, or in combination of two or more kinds thereof. For example, any rubber shown below, or a blend of two or more kinds thereof can be used.

The natural rubber may be sheet rubber or block rubber, and all RSS #1 to #5 can be used.

The synthetic rubber here used can be, for example, any of various diene-based synthetic rubber and diene-based copolymer rubber, and special rubber and modified rubber. Specific examples include a butadiene-based polymer such as polybutadiene (BR), a copolymer of butadiene and an aromatic vinyl compound (for example, SBR or NBR), or a copolymer of butadiene and other diene-based compound; an isoprene-based polymer such as polyisoprene (IR), a copolymer of isoprene and an aromatic vinyl compound, or a copolymer of isoprene and other diene-based compound; chloroprene rubber (CR), butyl rubber (IIR), halogenated butyl rubber (X-IIR); ethylene-propylene-based copolymer rubber (EPM), ethylene-propylene-diene-based copolymer rubber (EPDM), and any blended product thereof.

The rubber material may be rubber to which any other component such as an additive is added depending on the object.

Examples of the additive include a reinforcing material such as carbon black, a filler, a vulcanizing agent, a vulcanization accelerator, a fatty acid or a salt thereof, a metal oxide, a process oil, and an anti-aging agent, and these can be appropriately compounded.

The carcass formed from the rubber material is obtained by vulcanization of rubber with heating of an unvulcanized rubber material.

(Elastic Material: Resin Material)

The resin material forming the tire frame may include at least a resin (resin component), and may include any other component such as an additive as long as the effects of the embodiment are not impaired. The content of the resin (resin component) in the resin material is preferably 50% by mass or more, still more preferably 90% by mass or more with respect to the total amount of the resin material.

Examples of the resin (resin component) included in the resin material include thermoplastic resin, a thermoplastic elastomer, and a thermosetting resin. The resin material preferably includes a thermoplastic elastomer, more preferably includes a polyamide-based thermoplastic elastomer, from the viewpoint of ride quality in travelling.

Examples of the thermosetting resin include a phenol-based thermosetting resin, a urea-based thermosetting resin, a melamine-based thermosetting resin, and an epoxy-based thermosetting resin.

Examples of the thermoplastic resin can include polyamide-based thermoplastic resin, polyester-based thermoplastic resin, olefin-based thermoplastic resin, polyurethane-based thermoplastic resin, vinyl chloride-based thermoplastic resin, and polystyrene-based thermoplastic resin. Such resin may be used singly, or in combination of two or more kinds thereof. In particular, the thermoplastic resin is preferably at least one selected from polyamide-based thermoplastic resin, polyester-based thermoplastic resin, or olefin-based thermoplastic resin, still more preferably at least one selected from polyamide-based thermoplastic resin or olefin-based thermoplastic resin.

Examples of the thermoplastic elastomer include a polyamide-based thermoplastic elastomer (TPA), a polystyrene-based thermoplastic elastomer (TPS), a polyurethane-based thermoplastic elastomer (TPU), an olefin-based thermoplastic elastomer (TPO), a polyester-based thermoplastic elastomer (TPC), a thermoplastic vulcanizates (TPV), or other thermoplastic elastomer (TPZ), as prescribed according to JIS K6418. The resin here used is preferably the thermoplastic resin, still more preferably the thermoplastic elastomer, in consideration of, for example, elasticity necessary for travelling and formability in production.

The resin material forming the tire frame, here used, is preferably a material including the same resin as that included in the bead member. As a polyester-based thermoplastic resin and thermoplastic elastomer is included in the bead filler, it is preferred that a polyester-based thermoplastic resin or thermoplastic elastomer is also used in the tire frame, from the viewpoint of adhesiveness.

(Other Component)

The elastic material (rubber material or resin material) may include, if desired, any component other than the rubber or the resin. Examples of such other component include each filler (for example, silica, calcium carbonate, or clay), an anti-aging agent, an oil, a plasticizer, a colorant, a weather-resistant agent, and a reinforcing material.

-Physical Properties of Elastic Material-

In a case in which the resin material is used as the elastic material (namely, in the case of the tire frame for resin tires), the melting point of the resin included in the resin material is, for example, from about 100°C to 350°C, and is preferably from about 100°C to 250°C, still more preferably from 120°C to 250°C, from the viewpoint of durability and productivity of the tire.

The tensile elastic modulus of the elastic material (tire frame) by itself, as prescribed according to JIS K7113: 1995, is preferably from 50 MPa to 1000 MPa, still more preferably from 50 MPa to 800 MPa, particularly preferably from 50 MPa to 700 MPa. In a case in which the tensile elastic modulus of the elastic material is from 50 MPa to 1000 MPa, rim assembling can be efficiently performed with the shape of the tire frame being retained.

The tensile strength of the elastic material (tire frame) by itself, as prescribed according to JIS K7113 (1995), is usually from about 15 MPa to 70 MPa, preferably from 17 MPa to 60 MPa, still more preferably from 20 MPa to 55 MPa.

The tensile yield strength of the elastic material (tire frame) by itself, as prescribed according to JIS K7113 (1995), is preferably 5 MPa or more, still more preferably from 5 MPa to 20 MPa, particularly preferably from 5 MPa to 17 MPa. In a case in which the tensile yield strength of the elastic material is 5 MPa or more, the elastic material can resist deformation under a load applied to the tire in travelling or the like.

The tensile yield elongation of the elastic material (tire frame) by itself, as prescribed according to JIS K7113 (1995), is preferably 10% or more, still more preferably from 10% to 70%, particularly preferably from 15% to 60%. In a case in which the tensile yield elongation of the elastic material is 10% or more, a large elastic area can be obtained and rim assembling properties can be improved.

The tensile elongation at break of the elastic material (tire frame) by itself, as prescribed according to JIS K7113 (1995), is preferably 50% or more, still more preferably 100% or more, particularly preferably 150% or more, most preferably 200% or more. In a case in which the tensile elongation at break of the elastic material is 50% or more, rim assembling properties are favorable and breaking due to impact can be hardly made.

The deflection temperature under load (at a load of 0.45 MPa) of the elastic material (tire frame) by itself, as prescribed according to ISO 75-2 or ASTM D648, is preferably 50°C or more, still more preferably from 50°C to 150°C, particularly preferably from 50°C to 130°C. In a case in which the deflection temperature under load of the elastic material is 50°C or more, the tire frame can be inhibited from being deformed even in a case in which vulcanization is performed in production of the tire.

The tire 1 according to the embodiment, illustrated in Figure 1, is a so-called tubeless tire in which the bead portion 12 is mounted to the rim R, whereby an air room is formed between the tire 1 and the rim R, but the embodiment is not limited to such a mode and the tire may have a complete tube shape.

The method of producing the tire according to the embodiment is not particularly limited except that the bead filler of the bead member is formed by the above-mentioned resin composition, and any known production method can be applied except for formation of the material of the bead filler.

The above embodiment is one example and can be variously modified and carried out within the scope of the appended claims.

Examples

Hereinafter, the invention will be specifically described with reference to Examples, but the invention is only limited by the scope of the appended claims.

[Examples 1 to 3 and Comparative Examples 1 to 5]

Materials described in Table 1 were mixed in respective amounts (parts by mass) shown in each Table, whereby each resin composition of Examples 1 to 3 and Comparative Examples 1 to 5 was obtained. The details of the materials in such each Table are as described below.

< Compound Material >

(Thermoplastic Resin)

PBT ... polybutylene terephthalate ("Toraycon 1401X06" manufactured by Toray Industries, Inc., Tg: 64°C)

<Thermoplastic Elastomer>

TPC1 ... polyester-based thermoplastic elastomer ("Hytrel 5557" manufactured by Du Pont-Toray Co., Ltd., Tg: -25°C)
TPC2 ... polyester-based thermoplastic elastomer ("Hytrel 6347" manufactured by Du Pont-Toray Co., Ltd., Tg: 18°C)
TPC2... polyester-based thermoplastic elastomer ("Hytrel 7247" manufactured by Du Pont-Toray Co., Ltd., Tg: 25°C)

<Evaluation>

A test piece was produced from the resulting resin composition by injection molding, and subjected to the following measurement and evaluation.

· Measurement of Tensile Elastic Modulus

A plate having a thickness of 2 mm was produced from the resulting resin composition and a dumbbell test piece of JIS3 was punched out, thereby preparing each sample for tensile elastic modulus measurement. Each prepared sample for tensile elastic modulus measurement was used to carry out tensile elastic modulus measurement according to the above-mentioned method.

· Charpy Impact Test (Normal Temperature Condition)

A test piece having a thickness of 2 mm, produced from the resulting resin composition, was used, and the Charpy impact test (normal temperature condition) was performed according to the following method.
The impact resistance was evaluated by the results of the Charpy impact test (according to JIS K7111-1: 2012). Specifically, the test was performed at 23°C in a condition of an impact hammer of 2 J, by use of a digital impact testing machine (DG-UB model, manufactured by Toyo Seiki Seisaku-sho, Ltd.), and the evaluation was performed according to the following criteria.

Not broken ... A
Broken ... B

The results are shown in Table 1. A blank column is exhibited in the case of no breaking occurred in the Charpy impact test (normal temperature), or any impact value (unit: $kJ/m^2$) is described in the case of breaking occurred in the test, in the column of "Room temperature NB" in Table 1.

· Glass Transition Temperature

A test piece having a thickness of 2 mm, produced from the resulting resin composition, was used, and the glass transition temperature was measured according to the above-mentioned method.

· Viscoelasticity (Tan δ Curve)

A test piece having a thickness of 2 mm, produced from the resulting resin composition, was used, and a Tan δ curve was obtained by viscoelasticity measurement according to the above-mentioned method. In a case in which the presence of any peak or shoulder was not clear, the presence or absence of any peak or shoulder was confirmed by performing the above fitting and thus determining the fitting parameter.

· State of Blending (Presence or Absence of Sea-island Structure)

A test piece having a thickness of 2 mm, produced from the resulting resin composition, was subjected to measurement of the presence or absence of a sea-island structure with an atomic force microscope (AFM).

The results are shown in Table 1.

[Table 1]

| | Type of resin | Category of material | Trade name | Tg (°C) | HS/SS | Comparative Example 1 | Example 1 | Example 2 | Example 3 | Comparative Example 2 | Comparative Example 3 | Comparative Example 4 | Comparative Example 5 |
|---|---|---|---|---|---|---|---|---|---|---|---|---|---|
| | Thermoplastic resin | PBT | 1401x06 | 64 | – | 100 | 20 | 30 | 10 | 40 | 20 | 40 | 80 |
| | Thermoplastic elastomer | TPC1 | Hytrel 5557 | -25 | 60-40 | | 80 | 70 | | | | | |
| | | TPC2 | Hytrel 6347 | 18 | 75-25 | | | | 90 | 60 | | | 20 |
| | | TPC3 | Hytrel 7247 | 25 | 76-24 | | | | | | 80 | 60 | |
| Evaluation | | Elastic modulus [MPa] | | | | 1940 | 491 | 691 | 587 | 1140 | 900 | 1250 | 1870 |
| | | Charpy (normal temperature) | | | | B | A | A | A | B | B | B | B |
| | | Room temperature NB | | | | 3.1 | | | | 12 | 16 | 9 | 6 |
| | | Glass transition temperature (°C) | Tg1 | | | 64 | -38 | -43 | 16 | 52 | 38 | 48 | 58 |
| | | | Tg2 | | | | 54 | 60 | | | | | |
| | Viscoelasticity | Peak half-value width (°C) | | | | | | | 86 | | | | |
| | | Fitting parameter * higher in accuracy as closer to 0 | 2 peaks | | | | | | 0.0004 | | | | |
| | | | 1 peak | | | | | | 0.0039 | | | | |
| | | Determination | | | | | | | 2 peaks | | | | |
| | State of blending | Measurement with AFM | | | | Sea-island | Sea-island | Compatible | Compatible | Compatible | Compatible | Compatible | |

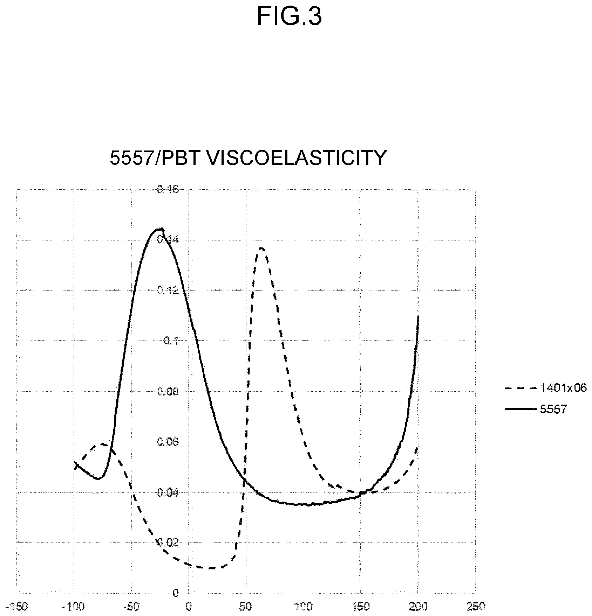

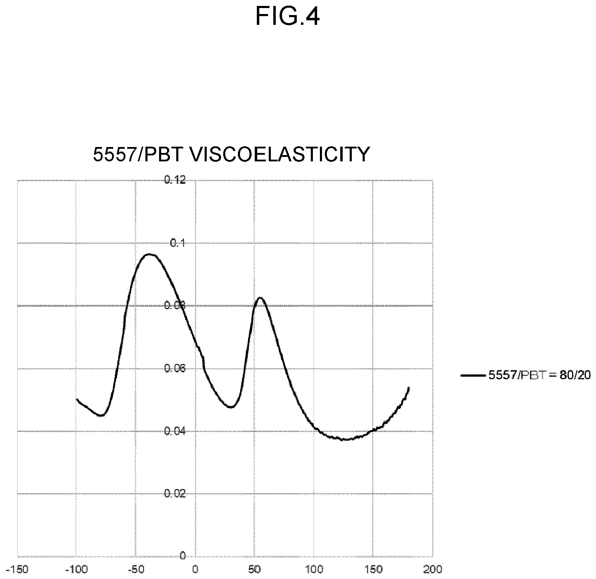

Figure 3 illustrates respective Tan $\delta$ curves obtained from viscoelasticity measurement of the polyester-based thermoplastic elastomer (TPC1: "Hytrel 5557") and the polybutylene terephthalate (PBT: "Toraycon 1401X06"). In Figure 3, the horizontal axis represents the temperature (°C) and the vertical axis represents the Tan $\delta$, and each trade name is omitted and only each item number, for example, "5557" in the case of "Hytrel 5557", is described. The same is also true for Figure 4, Figure 5 and Figure 8 to Figure 12. As can be seen in Figure 3, the Tan $\delta$ curve of the polyester-based thermoplastic elastomer (TPC1) has a peak around -25°C, and the Tan $\delta$ curve of the polybutylene terephthalate (PBT) has a peak around 60°C.

In this regard, Figure 4 illustrates a Tan $\delta$ curve obtained from viscoelasticity measurement of the resin composition obtained by blending at a mass ratio of TPC1/PBT of 80/20 in Example 1. The Tan $\delta$ curve illustrated in Figure 4, while is slightly shifted with respect to respective peak positions in the Tan $\delta$ curves of TPC1 (Hytrel 5557) and PBT (Toraycon 1401X06) illustrated in Figure 3, clearly exhibits two peaks corresponding to such respective peaks. Further, a sea-island structure was observed with AFM.

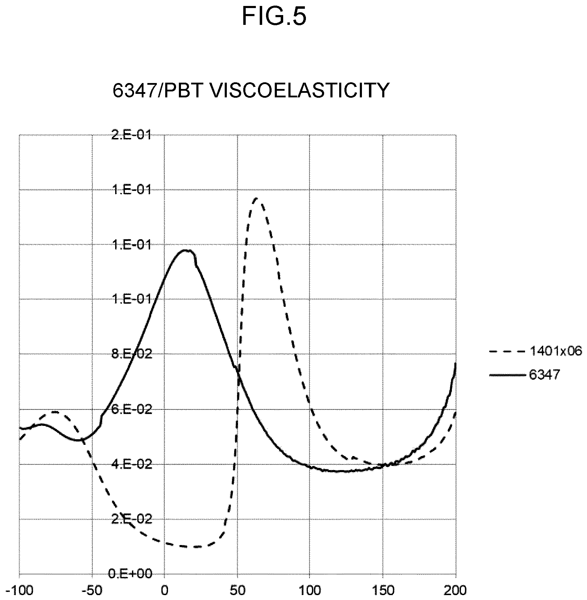

Figure 5 illustrates respective Tan $\delta$ curves obtained from viscoelasticity measurement of the polyester-based thermoplastic elastomer (TPC2: "Hytrel 6347") and the polybutylene terephthalate (PBT: "Toraycon 1401X06").

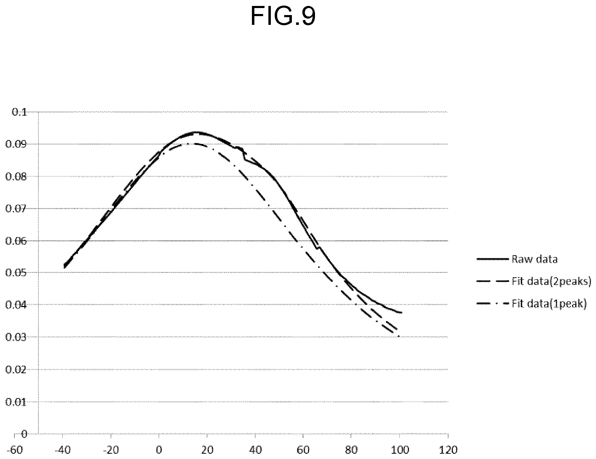

Figure 8 illustrates a Tan $\delta$ curve obtained from viscoelasticity measurement of the resin composition obtained by blending at a mass ratio of TPC2/PBT of 90/10 in Example 3. The Tan $\delta$ curve illustrated in Figure 8 was fitted with a Tan $\delta$ curve (1 peak) of single TPC2 and a curve (2 peaks) obtained by combining respective Tan $\delta$ curves of TPC2 and PBT, as illustrated in Figure 9, and the fitting parameters were determined. As a result, while the parameter with respect to 1 peak was 0.0039, the parameter with respect to 2 peaks was 0.0004 which was a value close to 0. It has been thus found that a portion A of the Tan $\delta$ curve illustrated in Figure 8 corresponds to a shoulder derived from TPC2.

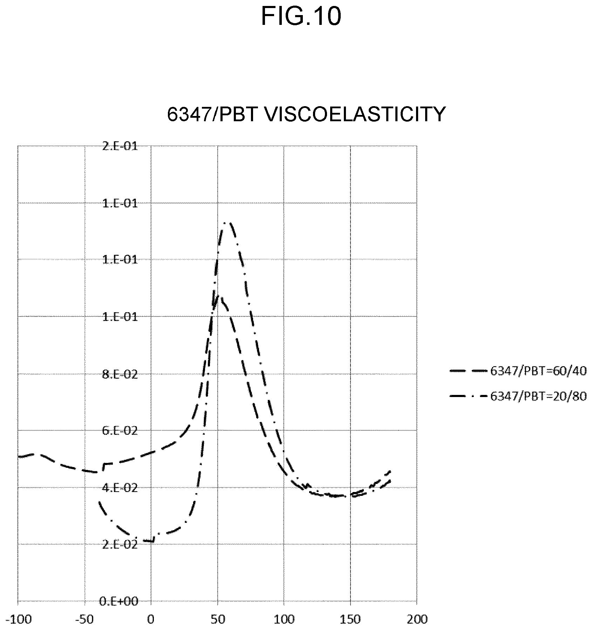

Figure 10 illustrates respective Tan $\delta$ curves obtained from viscoelasticity measurement of the resin compositions at blending ratios (mass ratios) of TPC2 and PBT changed to 60/40 and 20/80, in Comparative Examples 2 and 5. Only one peak was observed and no shoulder was observed in each of the Tan $\delta$ curves illustrated in Figure 10.

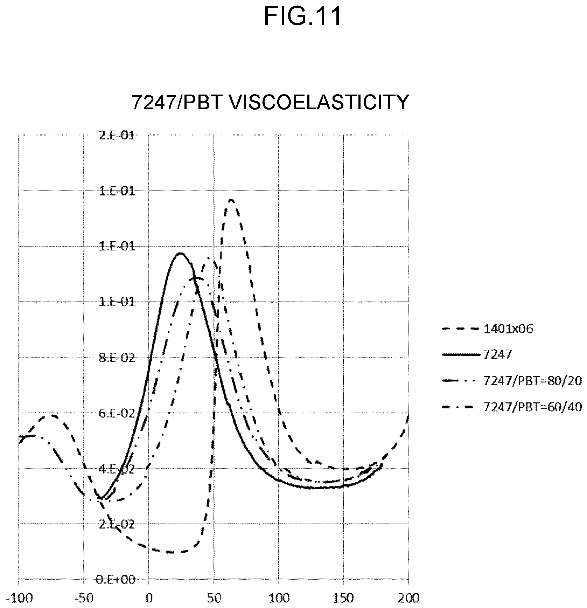

Figure 11 illustrates respective Tan $\delta$ curves obtained from viscoelasticity measurement of the polyester-based thermoplastic elastomer (TPC3: "Hytrel 7247") and the polybutylene terephthalate (PBT: "Toraycon 1401X06"), and respective Tan $\delta$ curves obtained from viscoelasticity measurement of resin compositions (Comparative Examples 3 and 4) at blending ratios of TPC3 and PBT, of 80/20 and 60/40.

Only one peak was observed and no shoulder was observed in each of the Tan $\delta$ curves illustrated in Figure 11.

·Peak Half-value Width in Tan $\delta$ Curve

The peak half-value width in each of the Tan $\delta$ curves was determined according to the above-mentioned method.

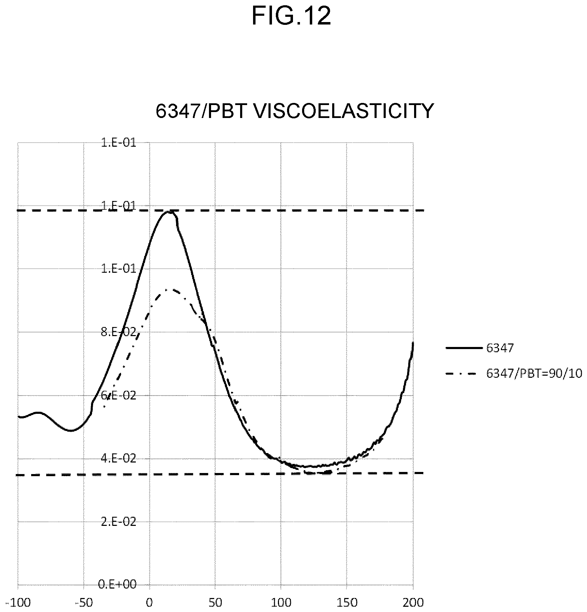

Figure 12 illustrates a Tan $\delta$ curve obtained from viscoelasticity measurement of a test piece of single TPC2, and Tan $\delta$ curve obtained from viscoelasticity measurement of test piece of the resin composition in Example 3. As illustrated in Figure 12, the half-value width was 69°C which was obtained by defining the difference between the lowest value and the peak top around from -100°C to 150°C, in the Tan $\delta$ curve obtained by viscoelasticity measurement of the test piece of TPC2, as a height, and determining the width between the temperature values of the higher temperature and the lower temperature at the Tan $\delta$ at the half value of the height, as the half-value width.

In this regard, the half-value width in the Tan $\delta$ curve obtained by viscoelasticity measurement of the test piece of the resin composition in Example 3 was determined, and was 86°C.

The respective test pieces formed from the resin compositions in Examples 1 to 3 each had an elastic modulus in a range of from 400 to 1100 MPa and thus were excellent in rigidity (load resistance), and did not cause any breaking in the Charpy impact test (normal temperature) and thus were also excellent in impact resistance.

In this regard, the test piece produced from only PBT in Comparative Example 1, among the respective test pieces formed from the resin compositions in Comparative Examples, had an elastic modulus of more than 1100 MPa and thus was too strong in rigidity (load resistance), and the test pieces in all Comparative Examples each caused breaking in the Charpy impact test (normal temperature) and thus did not provide any desired impact resistance.

Reference Signs List

1: tire, 10: tread portion, 11: side portion, 12: bead portion, 20: carcass, 20a: body portion, 20b: folded portion, 30: belt, 40: rubber, 50: bead member, 60: bead core, 62a: bead wire, 62: covering resin, 65: covering layer, 70: bead filler, CL: tire equatorial plane, R: rim

**Claims**

1. A tire (1) comprising a bead member having a bead core (60) and a bead filler (70) located at an outer side of the bead core (60) in a tire radial direction,

wherein the bead filler (70) is formed of a resin composition, which comprises a thermoplastic resin and a thermoplastic elastomer, of which a Tan δ curve obtained by viscoelasticity measurement has at least two peaks, or at least one peak having one or more shoulders, and which has a tensile elastic modulus of from 400 to 1100 MPa,

**characterized in that** the thermoplastic resin is a polyester-based thermoplastic resin and the thermoplastic elastomer is a polyester-based thermoplastic elastomer,

wherein the viscoelasticity measurement is obtainable by subjecting a test piece having a width of 6 mm, a length of 38 mm, and a thickness of 2 mm to a torsion test mode at a measurement gap of 20 mm with a viscoelasticity measurement apparatus (ARES-G2) manufactured by TA Instruments, under conditions of a range of from -100°C to 150°C, a strain of 0.28%, and 35 Hz,

wherein tensile elastic modulus is measured according to JIS K7113: 1995

2. The tire (1) according to claim 1, wherein the Tan δ curve has a half-value width of 70°C or more.

3. The tire (1) according to claim 1 or 2, wherein the thermoplastic elastomer has a glass transition temperature of less than 25°C.

4. The tire (1) according to any one of claims 1 to 3, wherein the thermoplastic resin has a glass transition temperature of 40°C or more.

5. The tire (1) according to any one of claims 1 to 4, wherein a mass ratio of a content of the thermoplastic elastomer and a content of the thermoplastic resin which are included in the resin composition (Content of thermoplastic elastomer/Content of thermoplastic resin) is from 65/35 to 95/5.


**Patentansprüche**

1. Reifen (1) umfassend ein Wulstelement mit einem Wulstkern (60) und einem Kernreiter (70), der sich an einer Außenseite des Wulstkerns (60) in einer Reifenradialrichtung befindet,

wobei der Kernreiter (70) aus einer Harzzusammensetzung gebildet ist, die ein thermoplastisches Harz und ein thermoplastisches Elastomer umfasst, von der eine durch Messung der Viskoelastizität erlangte tan δ-Kurve mindestens zwei Peaks aufweist, oder mindestens einen Peak mit einer oder mehreren Schultern, und die einen Elastizitätsmodul von 400 bis 1100 MPa aufweist,

**dadurch gekennzeichnet, dass** das thermoplastische Harz ein thermoplastisches Harz auf Polyesterbasis ist und das thermoplastische Elastomer ein thermoplastisches Elastomer auf Polyesterbasis ist,

wobei die Messung der Viskoelastizität dadurch erlangt wird, dass ein Teststück mit einer Breite von 6 mm, einer Länge von 38 mm und einer Dicke von 2 mm einem Torsionstestmodus bei einem Messspalt von 20 mm mit einer von TA Instruments hergestellten Vorrichtung zur Messung der Viskoelastizität (ARES-G2) unterzogen wird, unter Bedingungen in einem Bereich von -100 °C bis 150 °C, einer Dehnung von 0,28 % und 35 Hz,

wobei ein Elastizitätsmodul gemäß JIS K7113:1995 gemessen wird.

2. Reifen (1) nach Anspruch 1, wobei die tan δ-Kurve eine Halbwertsbreite von 70° C oder mehr aufweist.

3. Reifen (1) nach Anspruch 1 oder 2, wobei das thermoplastische Elastomer eine Glasübergangstemperatur von weniger als 25 °C aufweist.

4. Reifen (1) nach einem der Ansprüche 1 bis 3, wobei das thermoplastische Harz eine Glasübergangstemperatur von 40 °C oder mehr aufweist.

5. Reifen (1) nach einem der Ansprüche 1 bis 4, wobei ein Massenverhältnis eines Gehalts des thermoplastischen Elastomers und eines Gehalts des thermoplastischen Harzes, die in der Harzzusammensetzung eingeschlossen sind, (Gehalt an thermoplastischem Elastomer/Gehalt an thermoplastischem Harz) zwischen 65/35 und 95/5 liegt.

**Revendications**

1. Bandage pneumatique (1) comprenant un élément de talon ayant une tringle (60) et un bourrage sur tringle (70) situé au niveau d'un côté externe de la tringle (60) dans une direction radiale du bandage pneumatique,

dans lequel le bourrage sur tringle (70) est formée d'une composition de résine, qui comprend une résine thermoplastique et un élastomère thermoplastique, dont une courbe Tan $\delta$, obtenue par mesure de viscoélasticité, présente au moins deux pics, ou au moins un pic avec un ou plusieurs épaulements, et qui a un module d'élasticité en traction compris entre 400 et 1100 MPa,
**caractérisé en ce que** la résine thermoplastique est une résine thermoplastique à base de polyester et **en ce que** l'élastomère thermoplastique est un élastomère thermoplastique à base de polyester,
dans lequel la mesure de la viscoélasticité peut être obtenue en soumettant un échantillon présentant une largeur de 6 mm, une longueur de 38 mm et une épaisseur de 2 mm à un mode d'essai de torsion à un écart de mesure de 20 mm avec un appareil de mesure de la viscoélasticité (ARES-G2) fabriqué par TA Instruments, dans des conditions allant de -100 °C à 150 °C, à une déformation de 0,28 %, et à 35 Hz,
dans lequel un module d'élasticité en traction est mesuré selon la norme JIS K7113:1995.

2. Bandage pneumatique (1) selon la revendication 1, dans lequel la courbe Tan $\delta$ a une largeur de demi-valeur de 70 °C ou plus.

3. Bandage pneumatique (1) selon la revendication 1 ou 2, dans lequel l'élastomère thermoplastique a une température de transition vitreuse inférieure à 25 °C.

4. Bandage pneumatique (1) selon l'une quelconque des revendications 1 à 3, dans lequel la résine thermoplastique a une température de transition vitreuse de 40 °C ou plus.

5. Bandage pneumatique (1) selon l'une quelconque des revendications 1 à 4, dans lequel un rapport de masse entre une teneur de l'élastomère thermoplastique et une teneur de la résine thermoplastique incluses dans la composition de résine (teneur en élastomère thermoplastique/teneur en résine thermoplastique) est compris entre 65/35 et 95/5.

EP 3 878 665 B1

# FIG.1

FIG.2

# FIG.3

## 5557/PBT VISCOELASTICITY

# FIG.4

5557/PBT VISCOELASTICITY

5557/PBT = 80/20

# FIG.5

## 6347/PBT VISCOELASTICITY

# FIG.8

6347/PBT VISCOELASTICITY

6347/PBT=90/10

FIG.9

# FIG.10

## 6347/PBT VISCOELASTICITY

# FIG.11

7247/PBT VISCOELASTICITY

# FIG.12

## 6347/PBT VISCOELASTICITY

**EP 3 878 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013086771 A
- JP 2011207157 A
- JP 2015123905 A
- JP H09300924 A